# EUROPÄISCHE PATENTSCHRIFT

(11) **EP 0 764 397 B1**
(45) Veröffentlichungstag und Bekanntmachung des Hinweises auf die Patenterteilung: **21.02.2001**
(21) Anmeldenummer: 96114562.0
(22) Anmeldetag: 11.09.1996
(51) Int. Cl.: A01C 7/00, A01C 7/20, A01C 5/06

(54) **Drillmaschine zum Ausbringen von Saatgut in vorbereitetem und nicht vorbereitetem Boden**
Seeddrill for working in prepared or unprepared soil
Semoir pour semer des graines dans du sol cutivé ou non

(30) Priorität: 19.09.1995 DE 19534740
(43) Veröffentlichungstag der Anmeldung: 26.03.1997
(73) Patentinhaber: Landmaschinenfabrik Köckerling GmbH & Co. KG, 33415 Verl (DE)
(72) Erfinder: Dreesbeimdieke, Hermann, Dipl.-Ing., 33334 Gütersloh (DE)
(74) Vertreter: Schmitz, Hans-Werner, Dipl.-Ing.

(56) Entgegenhaltungen:
- EP-A- 0 372 901
- AU-A- 567 228
- DE-A- 4 333 288
- GB-A- 1 460 737
- US-A- 3 005 426

## Beschreibung

Die Erfindung betrifft eine Drillmaschine zum Ausbringen von Saatgut in vorbereitetem und nicht vorbereitetem Boden nach dem Oberbegriff des Anspruchs 1. Eine derartige Drillmaschine ist aus der AU 567 228 A bekannt.

Weitere Drillmaschinen sind aus der DE 3716672 A1, der EP-A-372901 und der DE 4445338 A1 bekannt. Die bekannte Drillmaschine weist einen Grundrahmen auf, an dem eine Mehrzahl von Werkzeugeinheiten angeordnet ist. Bei der bekannten Drillmaschine bestehen die Werkzeugeinheiten jeweils aus einem an einer Führung angeordneten Stützrad sowie einer Säschar, die als Zinkenschar ausgebildet ist und somit die auf dem Boden liegende Pflanzendecke zertrennen kann, so daß die Säschar sowohl als Schar wie auch als Schneidelement wirkt. Ferner weist die bekannte Drillmaschine ein Saatgutdosiersystem auf, das eine Mehrzahl von Saatgutzuleitungen umfaßt, die unmittelbar mit dem hohl ausgebildeten Säschar verbunden sind. Ferner ist an der Führung jeweils ein Festhalterad angeordnet, das durch das Gewicht der Führung aufgrund der Federkraft einer Feder gegen die Bodenoberfläche bzw. eine darauf angeordnete Auflageschicht gedrückt wird. Dadurch soll das Festhalterad bewirken, daß die Pflanzenrückstände, die sich auf der Bodenoberfläche befinden, praktisch kurzzeitig festgehalten werden, wenn das Festhalterad über diese Pflanzenrückstände hinüberrollt. Durch dieses Niederdrücken und Festhalten der Bodenauflageschicht soll erreicht werden, daß das Zinkenschar die Pflanzendecke leichter zertrennen kann und es nicht dazu kommt, daß die Pflanzenrückstände von dem Zinkenschar und dem Scharhalter aufgenommen werden und sich am hinteren Ende des Scharhalters anstauen und zu Verstopfungen führen.

Der Nachteil dieser bekannten Drillmaschine ist zunächst in der relativ aufwendigen Konstruktion gesehen, die durch die Notwendigkeit der zusätzlich an der Führung anzuordnenden Festhalteräder bedingt ist. Ferner haben im Rahmen der Erfindung durchgeführte Untersuchungen ergeben, daß trotz der geschilderten Maßnahmen zur Verhinderung von Verstopfungen diese nicht befriedigend vermieden werden können, da die jeweils an einem Halter befestigten Zinkenscharen nicht zueinander beweglich sind.

Es ist daher Aufgabe der vorliegenden Erfindung, eine Drillmaschine der im Oberbegriff des Anspruchs 1 angegebenen Art zu schaffen, die relativ einfach aufgebaut ist und die es möglich macht, ein Verstopfen durch auf den zu bearbeitenden Boden befindliche Pflanzenrückstände und ähnliches zu vermeiden.

Die Lösung dieser Aufgabe erfolgt durch die Merkmale des Anspruchs 1.

Erfindungsgemäß ist es vorgesehen, die Werkzeugeinheiten bestehend aus jeweils einer Schneid-Stützanordnung und einer Schar an einer Parallelogrammführung anzuordnen, die wiederum am Grundrahmen angeordnet ist. Hierbei ist in jedem Parallelogramm eine Kolbenzylindereinheit angeordnet, die etwa parallel zu einer der Diagonalen des Parallelogramms vorgesehen ist. Die Kolben-Zylindereinheiten sind miteinander verbunden. Diese Konstruktion macht es möglich, die Säscharen in senkrechter Richtung beweglich zueinander auszubilden.

Die Unteransprüche haben vorteilhafte Weiterbildungen der Erfindung zum Inhalt.

Ferner kann die Schneid-Stützanordnung durch eine entsprechende Verstelleinrichtung höhenverstellbar ausgebildet sein.

Ist ferner bei einer besonders bevorzugten Ausführungsform eine, in Fahrtrichtung gesehen hinter den Werkzeugeinheiten angeordnete Walze vorgesehen, die mittels einer über Kolben-Zylindereinheiten belasteten Traganordnung am Grundrahmen angelenkt ist, kann eine Kopplung aller Kolben-Zylindereinheiten der Werkzeugeinheiten sowie der nachlaufenden Walze vorgenommen werden. Diese Kopplung hat beispielsweise beim Überfahren von Bodenunebenheiten eine Ausgleichswirkung zur Folge, die es möglich macht, an allen Schneid-Stützanordnungen die gleiche Kraft auf den Boden aufzubringen. Hierbei wird das Gewicht des Grundrahmens auf die Kolben-Zylindereinheiten und von diesen auf die Parallelogramme übertragen. Somit ist bei der zuvor beschriebenen besonders bevorzugten Ausführungsform die erfindungsgemäße Drillmaschine durch das Verbinden aller Kolben-Zylindereinheiten miteinander (also ohne zusätzliche externe Hydraulikflüssigkeitszufuhr) flexibel und anpassungsfähiger beim Ausgleich von Bodenunebenheiten und Hindernissen, was zum einen die zuvor erläuterte Karftvergleichmäßigung und zum anderen eine Verhinderung des Stopfphänomens möglich macht.

Alternativ zu der zuvor genannten Ausführungsform kann eine, in Fahrtrichtung gesehen hinter den Werkzeugeinheiten angeordnete Walze vorgesehen sein, die gegenüber dem Grundrahmen höhenbeweglich ist. Die Kopplung der Kolbenzylindereinheiten hat auch bei dieser alternativen Ausführungsform beim Überfahren von Bodenunebenheiten eine Ausgleichswirkung zur Folge, die es möglich macht, an allen Schneid-Stützanordnungen die gleiche Kraft aufzubringen.

Bei einer weiteren bevorzugten Ausführungsform wird zur Vermeidung von Kavitationserscheinungen innerhalb der Zylinder der Kolben-Zylindereinheiten ein Nachlaufkolben im Zylindergehäuse vorgesehen, der den Zylinderraum in eine ölgefüllte Kammer und eine ölfreie Kammer unterteilt. Die ölgefüllte Kammer ist hierbei benachbart zum Zylinderboden angeordnet, während die ölfreie Kammer zwischen dem eigentlichen an der Kolbenstange angeordneten Kolben und dem Nachlaufkolben liegt.

Bei einer weiteren bevorzugten Ausführungsform sind das Schneidelement und das Stützelement lösbar aneinander befestigt, was Vorteile bei der Montage und eine Erleichterung eventueller Reparaturarbeiten ergibt.

Um eine Vergleichmäßigung des bearbeiteten Bodens möglich zu machen, sind alle Werkzeugeinheiten der Drillmaschine derart angeordnet, daß sie ein in Fahrtrichtung gesehen nach hinten geschlossenes V bilden.

Eine gegenüber der zuvor genannten V-Anordnung noch bevorzugte Ausführungsform sieht vor, daß die Werkzeugeinheiten in zwei Reihen versetzt angeordnet sind. Zur besseren Saatgutbedeckung können hierbei zusätzlich hinter jeder Reihe Zustreichelemente angeordnet sein.

Vorteilhafterweise ist das Schar als Gänsefußschar ausgebildet. Ferner kann das Saatleitungsrohr an der Befestigungseinrichtung des Schars fixiert werden, wobei es, in Fahrtrichtung gesehen, hinter dem Schar angeordnet ist.

Weitere Einzelheiten, Merkmale und Vorteile der Erfindung ergeben sich aus nachfolgender Beschreibung eines Ausführungsbeispiels anhand der Zeichnung.

Es zeigt:
- Fig. 1: eine schematisch leicht vereinfachte Seitenansicht einer erfindungsgemäßen Drillmaschine,
- Fig. 2: eine schematisch leicht vereinfachte Draufsicht auf einen Teil der Drillmaschine gemäß Fig. 1,
- Fig. 3: eine schematisch leicht vereinfachte Draufsicht auf eine Werkzeugeinheit,
- Fig. 4: eine Seitenansicht in vereinfachter Darstellung der Werkzeugeinheit gemäß Fig. 3,
- Fig. 5: eine schematisch leicht vereinfachte Darstellung einer Kolben-Zylindereinheit, und

Fig. 6 bis 9 den Fig. 1 bis 4 entsprechende Darstellungen einer zweiten besonders bevorzugten Ausführungsform der erfindungsgemäßen Drillmaschine.

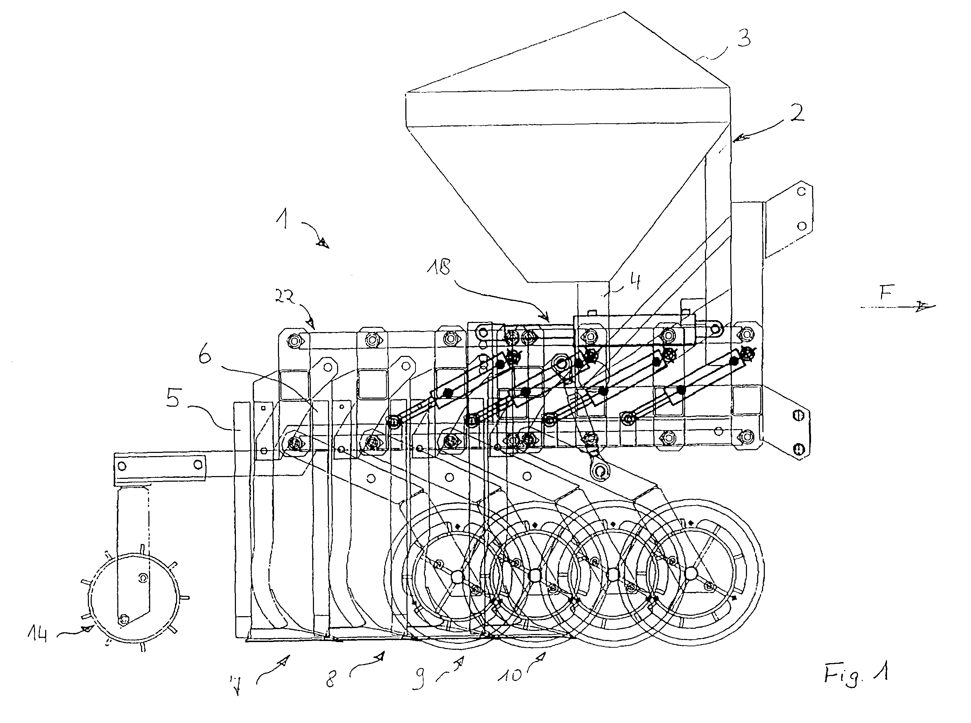

In Fig. 1 ist in schematisch leicht vereinfachter Darstellung eine Drillmaschine 1 gezeigt, deren Basiskomponenten ein Grundrahmen 2 und ein Saatgutdosiersystem sind, das aus einem Saatgutbehälter 3, einer Saatgutleitung 4 und Saatleitungsrohren besteht, von denen in Fig. 1 die Saatleitungsrohre 5 und 6 dargestellt sind. Üblicherweise weist das Saatgutdosiersystem ferner in Fig. 1 nicht näher dargestellte Steuereinrichtungen und eine Antriebseinrichtung, vorzugsweise in Form einer Pneumatikeinrichtung, zum Zuleiten des Saatgutes auf.

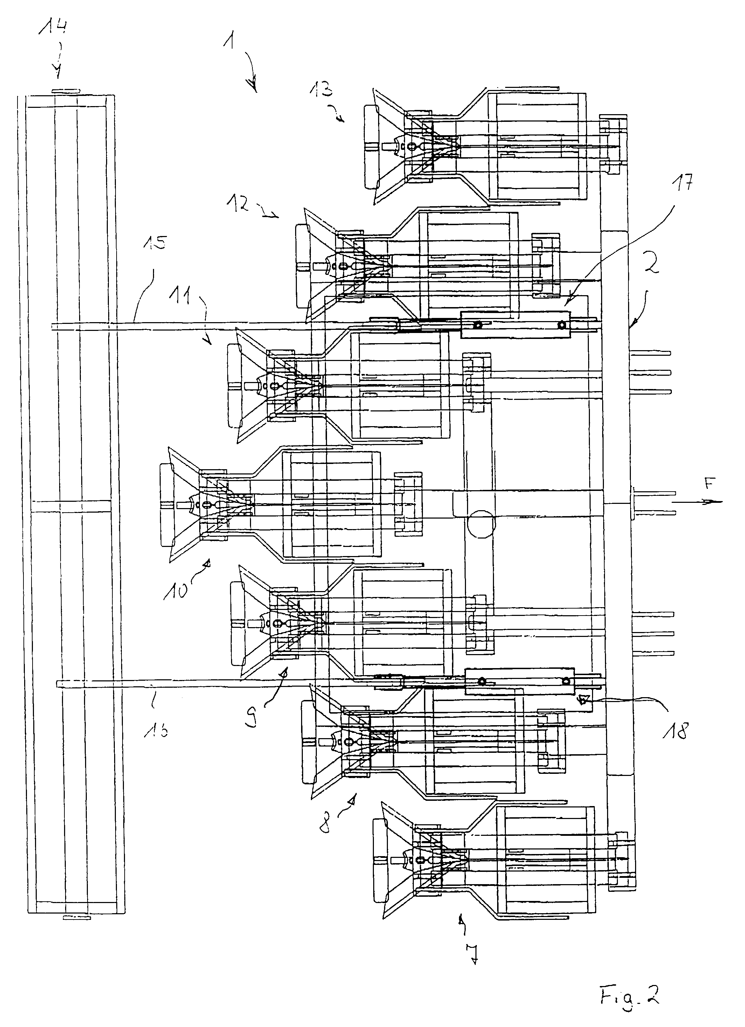

Wie die Zusammenschau der Fig. 1 und 2 verdeutlicht, weist die erfindungsgemäße Drillmaschine 1 eine Mehrzahl von Werkzeugeinheiten auf, wobei im Beispielsfalle sieben Werkzeugeinheiten 7 bis 13 vorgesehen sind. Wie Fig. 2 verdeutlicht, sind zur Vergleichmäßigung des bearbeiteten Bodens hinter der Maschine die Werkzeugeinheiten 7 bis 13 in Fahrtrichtung gesehen in Form eines nach hinten geschlossenen V zueinander angeordnet.

Ferner zeigen die Fig. 1 und 2 die Anordnung einer Walze 14 in Fahrtrichtung F hinter den Werkzeugeinheiten 7 bis 13. Die Walze 14 ist mittels einer zumindest zwei Tragarme 15, 16 aufweisender Tragarmanordnung am Grundrahmen 2 angelenkt. Eine Kolben-Zylinderanordnung bestehend aus zwei Kolben-Zylindereinheiten 17, 18 stützt sich einerseits am Grundrahmen 2 und andererseits an den Tragarmen 5 bzw. 6 ab. Somit ist es möglich, die Walze 14 mittels der Kolben-Zylindereinheiten (vorzugsweise Hydraulikkolben) mit entsprechenden Kräften zu beaufschlagen.

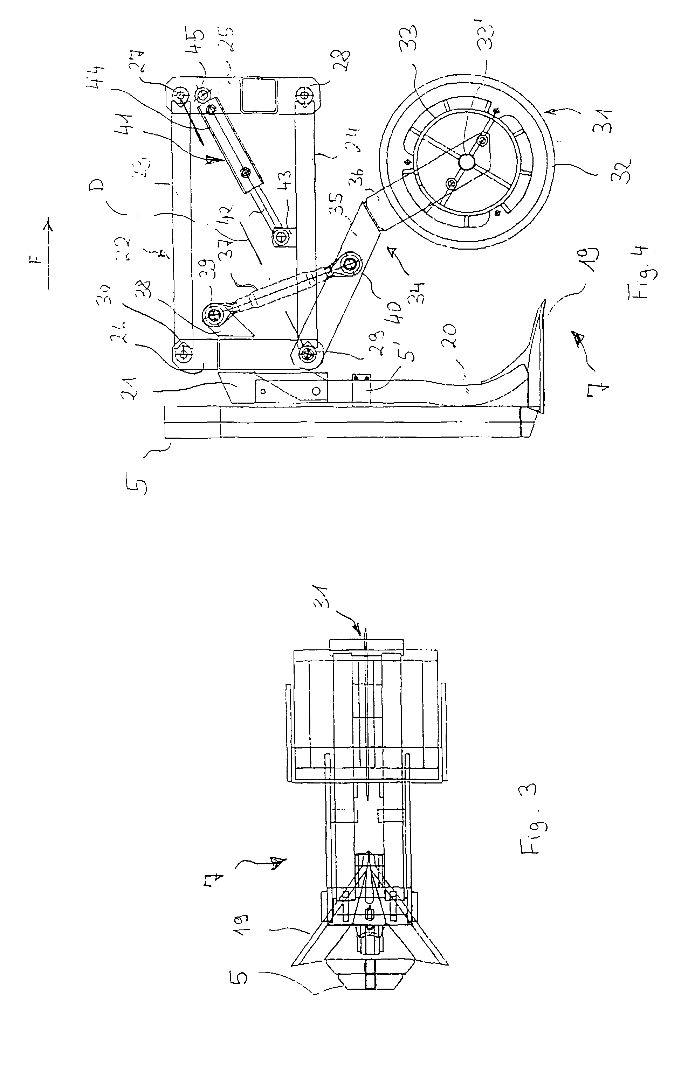

Die Werkzeugeinheiten 7 bis 13 sind alle identisch ausgebildet, so daß nachfolgend unter Bezugnahme auf die Fig. 3 und 4 repräsentativ die Werkzeugeinheit 7 hinsichtlich ihres Aufbaus und ihrer Funktionsweise beschrieben wird.

Die Fig. 3 und 4 zeigen, daß die Werkzeugeinheit 7 eine Schar, vorzugsweise in Form einer Gänsefußschar 19, aufweist. Das Schar 19 ist mittels einer Befestigungsstrebe bzw. Stiels 20 über einen Befestigungsflansch 21 an einer Parallelogrammführung 22 angebracht. Fig. 4 verdeutlicht, daß die Parallelogrammführung 22 vier Parallelogrammarme 23 bis 26 aufweist, wobei die Parallelogrammarme 23 und 24 die langen Seiten bilden, während die Parallelogrammarme 25 und 26 die kurzen Seiten bilden. Die Parallelogrammarme sind untereinander mittels Gelenken 27 bis 30 aneinander angelenkt. Die Seitenansicht auf die Werkzeugeinheit 7 gemäß Fig. 2 verdeutlicht, daß das Parallelogramm 22 im Einbauzustand in etwa senkrecht zur Bodenoberfläche vorgesehen ist.

Die Werkzeugeinheit 7 weist ferner eine Schneid-Stützanordnung 31 auf. Die Schneid-Stützanordnung 31 umfaßt ein Schneidelement bzw. eine Schneidscheibe 32 und ein Stützelement bzw. eine Stützwalze 33. Die Schneidscheibe 32 ist hierbei lösbar an der Stützwalze 33 angebracht. Die Schneid-Stützanordnung 31 ist über eine Lagerung 33' an einer Haltearmanordnung 34 drehbar gelagert. Die Haltearmanordnung 34 weist zwei miteinander starr verbundene Haltearme 35 und 36 auf.

Die Haltearmanordnung 34 ist am Gelenk 29 zwischen den Parallelogrammarmen 24 und 26 an der Parallelogrammführung 22 angelenkt. Ferner ist zwischen einem Anlenkpunkt 40 im gemäß Fig. 4 unteren Drittel des Haltearmes 35 und einem Anlenkpunkt 39 an einem mit dem Parallelogrammarm 26 verbundenen Halteflansch 38 eine Verstelleinrichtung 37 angeordnet. Die Verstelleinrichtung 37 kann als Spannschloß ausgebildet sein. Diese Anordnung macht es möglich, die Schneid-Stützanordnung 31 gegenüber der Parallelogrammführung 22 und damit gegenüber dem Schar 19 in ihrer Höhe zu verstellen.

Fig. 4 verdeutlicht ferner die Anordnung einer Kolben-Zylindereinheit 41 innerhalb der Parallelogrammführung 22. Die Kolben-Zylindereinheit 41 weist eine Kolbenstange 42 auf, die mit ihrem Befestigungsauge an einer Anlenkplatte 43 angelenkt ist, die wiederum am unteren Längs-Parallelogrammarm 24 befestigt ist. Der Zylinder bzw. das Zylindergehäuse 44 wiederum ist an einem Anlenkpunkt 45 an einem der kurzen Parallelogrammarme 25 angelenkt. Wie Fig. 4 zeigt, ist die Anordnung der Kolben-Zylindereinheit 41 in etwa parallel zu einer Diagonalen D des Parallelogramms 22. Die Diagonale D ist bei der in Fig. 4 dargestellten Ausführungsform diejenige, die zwischen dem in Fahrtrichtung F gesehen vorne angeordneten kurzen Parallelogrammarm 25 und dem der Schneid-Stützanordnung 31 benachbarten unteren Parallelogrammarm 24 liegt.

Aus Fig. 4 wird ferner deutlich, daß das Saatzuleitungsrohr 5 im Beispielsfalle mittels einer Befestigungslasche 5' am Stiel 20 des Schars 19 befestigt ist und in Fahrtrichtung gesehen hinter diesen angeordnet ist. Fig. 3 zeigt, daß das Saatzuleitungsrohr in Draufsicht gesehen Trapezform aufweist.

Wie eingangs erläutert, sind alle Kolben-Zylindereinheiten der erfindungsgemäßen Drillmaschine 1 miteinander zur Schaffung der erläuterten Ausgleichsmöglichkeiten verbunden. Die entsprechenden Verbindungsleitungen sind in den Figuren zur Vereinfachung der Darstellung nicht gezeigt.

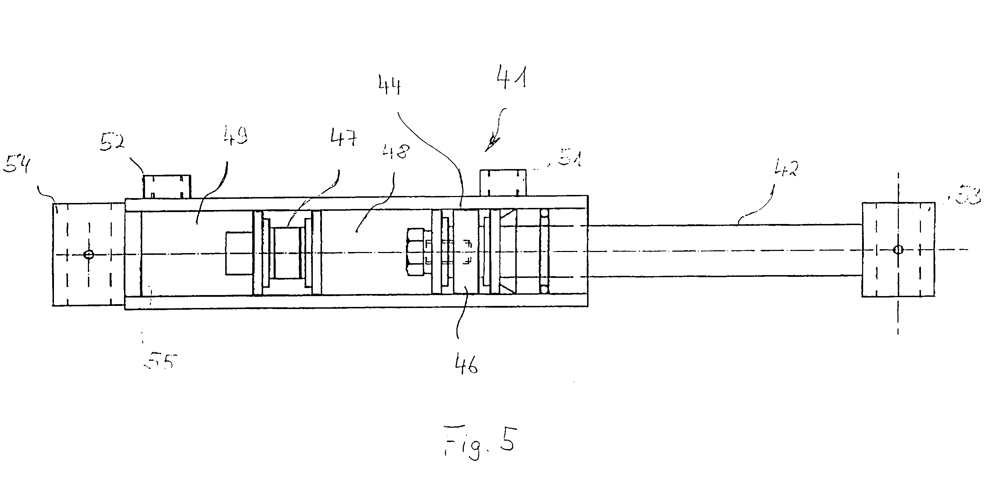

In Fig. 5 ist eine besonders bevorzugte Ausführungsform einer Kolben-Zylindereinheit 41 repräsentativ für alle anderen Einheiten dargestellt. Die Kolben-Zylindereinheit 41 weist die Kolbenstange 42 auf, an der im Inneren des Zylinders 44 ein Kolben 46 befestigt ist. Ferner ist ein fliegender Kolben 47 innerhalb des Zylinders angeordnet, der dessen Innenraum in eine ölfreie Kammer 48 und eine ölgefüllte Kammer 49 unterteilt. Die ölfreie Kammer 48 ist zwischen dem fliegenden Kolben 47 und dem Kolben 46 angeordnet, während die ölgefüllte Kammer 49 zwischen dem Zylinderboden 55 und dem fliegenden Kolben 47 liegt. Ansonsten weist die Kolben- Zylinderanordnung 41 wie üblich Anschlüsse 51 und 52 sowie Befestigungshülsen 53 und 54 auf. Durch die Anordnung des fliegenden Kolbens 47 wird beim Ausfahren der Kolbenstange 42 in ihre in Fig. 5 dargestellte obere Anschlaglage das Einsaugen von Gas verhindert, was zur Blasenbildung im Öl der ölgefüllten Kammer 49 führen würde. Der fliegende Kolben 47 verhindert ein derartiges Bilden eines Vakuums und damit die Blasenbildung, was wiederum Kavitationserscheinungen entgegenwirkt.

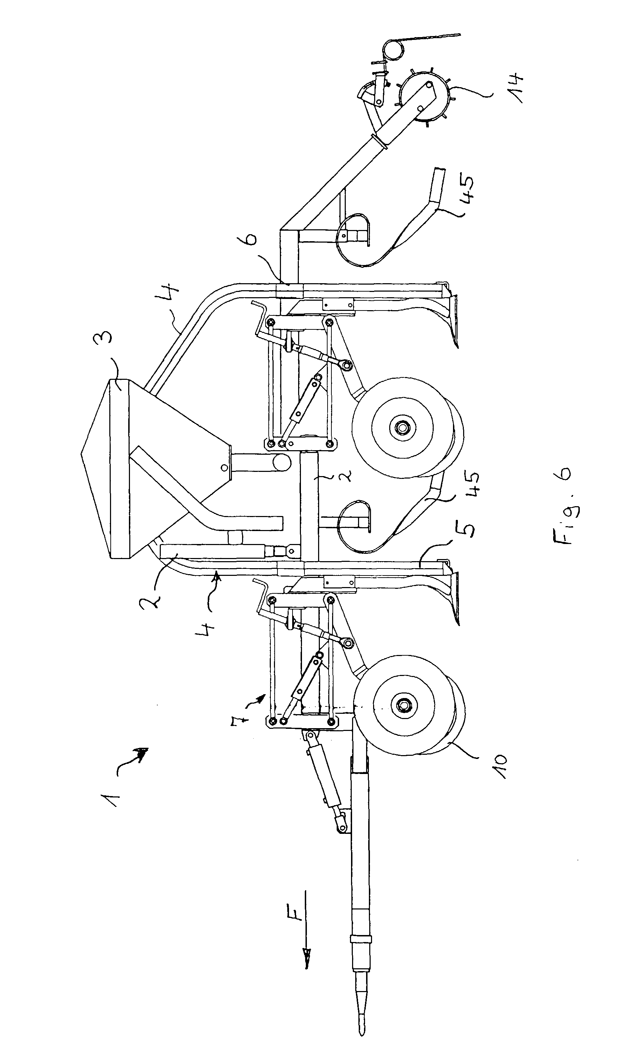

Nachfolgend wird anhand der Fig. 6 bis 9 eine zweite besonders bevorzugte Ausführungsform der erfindungsgemäßen Drillmaschine beschrieben. Alle Teile dieser zweiten Ausführungsform, die den Teilen der ersten Ausführungsform entsprechen, sind mit den gleichen Bezugsziffern versehen.

In Fig. 6 ist in schematisch leicht vereinfachter Darstellung eine Drillmaschine 1 gezeigt, deren Basiskomponenten ein Grundrahmen 2 und ein Saatgutdosiersystem sind, das aus einem Saatgutbehälter 3, und Saatleitungen 4 besteht, von denen in Fig. 6 die Saatleitungsrohre 5 und 6 dargestellt sind. Üblicherweise weist das Saatgutdosiersystem ferner in Fig. 6 nicht näher dargestellte Steuereinrichtungen und eine Antriebseinrichtung, vorzugsweise in Form einer Pneumatikeinrichtung, zum Zuleiten des Saatgutes auf.

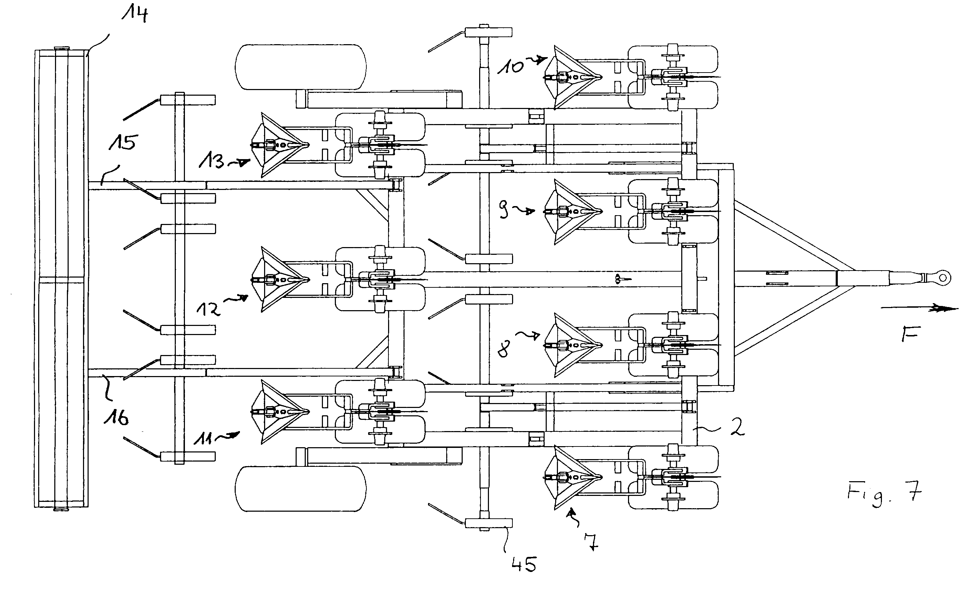

Wie die Zusammenschau der Fig. 6 und 7 verdeutlicht, weist die erfindungsgemäße Drillmaschine 1 eine Mehrzahl von Werkzeugeinheiten auf, wobei im Beispielsfalle sieben Werkzeugeinheiten 7 bis 13 vorgesehen sind. Wie Fig. 7 verdeutlicht, sind zur Vergleichmäßigung des bearbeiteten Bodens hinter der Maschine die Werkzeugeinheiten 7 bis 13, in Fahrtrichtung gesehen, in zwei Reihen versetzt angeordnet.

Ferner zeigen die Fig. 6 und 7 die Anordnung einer Walze 14 in Fahrtrichtung F hinter den Werkzeugeinheiten 7 bis 13. Die Walze 14 ist mittels einer zumindest zwei Tragarme 15, 16 aufweisender Tragarmanordnung am Grundrahmen 2 angelenkt. Darüberhinaus sind Zustreichelemente 45 hinter jeder Reihe vorgesehen.

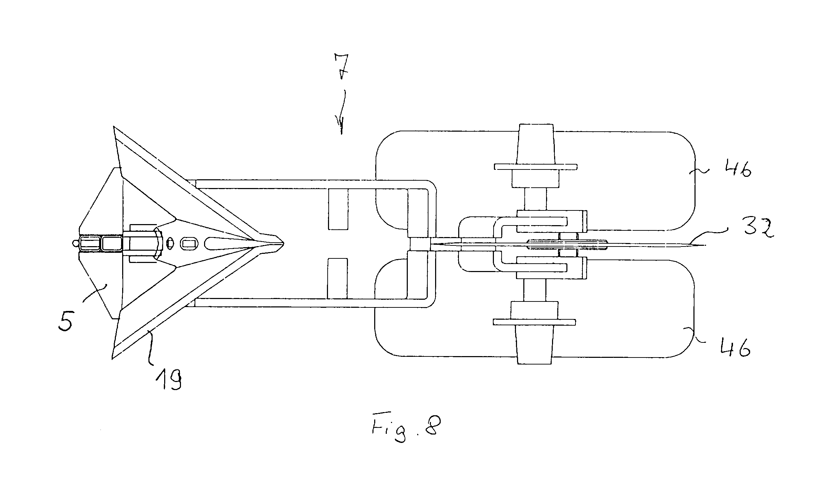

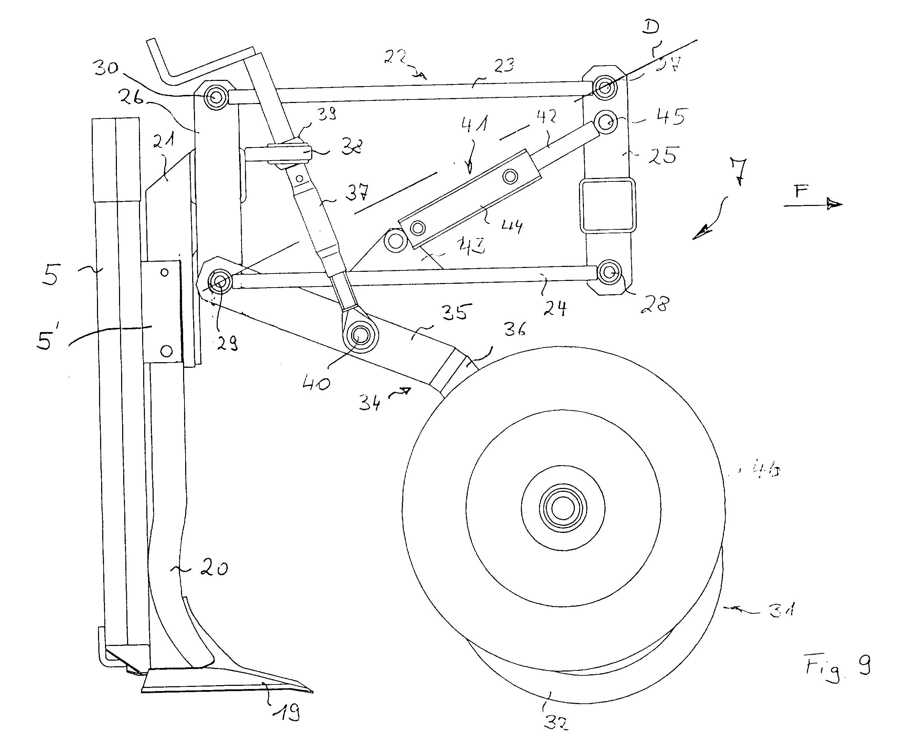

Die Werkzeugeinheiten 7 bis 13 sind alle identisch ausgebildet, so daß nachfolgend unter Bezugnahme auf die Fig. 8 und 9 repräsentativ die Werkzeugeinheit 7 hinsichtlich ihres Aufbaus und ihrer Funktionsweise beschrieben wird.

Die Fig. 8 und 9 zeigen, daß die Werkzeugeinheit 7 eine Schar, vorzugsweise in Form einer Gänsefußschar 19, aufweist. Das Schar 19 ist mittels einer Befestigungsstrebe bzw. Stiels 20 über einen Befestigungsflansch 21 an einer Parallelogrammführung 22 angebracht. Fig. 9 verdeutlicht, daß die Parallelogrammführung 22 vier Parallelogrammarme 23 bis 26 aufweist, wobei die Parallelogrammarme 23 und 24 die langen Seiten bilden, während die Parallelogrammarme 25 und 26 die kurzen Seiten bilden. Die Parallelogrammarme sind untereinander mittels Gelenken 27 bis 30 aneinander angelenkt. Die Seitenansicht auf die Werkzeugeinheit 7 gemäß Fig. 6 verdeutlicht, daß das Parallelogramm 22 im Einbauzustand in etwa senkrecht zur Bodenoberfläche vorgesehen ist.

Die Werkzeugeinheit 7 weist ferner eine Schneid-Stützanordnung 31 auf. Die Schneid-Stützanordnung 31 umfaßt bei dieser Ausführungsform ein Schneidelement bzw. eine drehbare Schneidscheibe 32 und zwei Räder 46 zu beiden Seiten der Schneidscheibe 32. Die Schneid-Stützanordnung 31 ist an einer Haltearmanordnung 34 drehbar gelagert. Die Haltearmanordnung 34 weist zwei miteinander starr verbundene Haltearme 35 und 36 auf.

Die Haltearmanordnung 34 ist am Gelenk 29 zwischen den Parallelogrammarmen 24 und 26 an der Parallelogrammführung 22 angelenkt. Ferner ist zwischen einem Anlenkpunkt 40 im gemäß Fig. 9 unteren Drittel des Haltearmes 35 und einem Anlenkpunkt 39 an einem mit dem Parallelogrammarm 26 verbundenen Halteflansch 38 eine Verstelleinrichtung 37 angeordnet. Die Verstelleinrichtung 37 ist hier als Kurbel ausgebildet. Diese Anordnung macht es möglich, die Schneid-Stützanordnung 31 gegenüber der Parallelogrammführung 22 und damit gegenüber dem Schar 19 in ihrer Höhe zu verstellen.

Fig. 9 verdeutlicht ferner die Anordnung einer Kolben-Zylindereinheit 41 innerhalb der Parallelogrammführung 22. Die Kolben-Zylindereinheit 41 weist eine Kolbenstange 42 auf, die mit ihrem Befestigungsauge an einem Anlenkpunkt 45 angelenkt ist, der wiederum am Parallelogrammarm 25 angeordnet ist. Der Zylinder bzw. das Zylindergehäuse 44 wiederum ist an einer Anlenkplatte 43 am Parallelogrammarm 24 angelenkt. Wie Fig. 9 zeigt, ist die Anordnung der Kolben-Zylindereinheit 41 in etwa parallel zu einer Diagonalen D des Parallelogramms 22. Die Diagonale D ist bei der in Fig. 9 dargestellten Ausführungsform diejenige, die zwischen dem in Fahrtrichtung F gesehen vorne angeordneten kurzen Parallelogrammarm 25 und dem der Schneid- Stützanordnung 31 benachbarten unteren Parallelogrammarm 24 liegt.

Aus Fig. 9 wird ferner deutlich, daß das Saatzuleitungsrohr 5 im Beispielsfalle mittels einer Befestigungslasche 5' am Stiel 20 des Schars 19 befestigt ist und in Fahrtrichtung gesehen hinter diesen angeordnet ist. Fig. 8 zeigt, daß das Saatzuleitungsrohr in Draufsicht gesehen Trapezform aufweist.

Wie eingangs erläutert, sind alle Kolben-Zylindereinheiten der erfindungsgemäßen Drillmaschine 1 miteinander zur Schaffung der erläuterten Ausgleichsmöglichkeiten verbunden. Die entsprechenden Verbindungsleitungen sind in den Figuren zur Vereinfachung der Darstellung nicht gezeigt.

## Patentansprüche

1. Drillmaschine (1) zum Ausbringen von Saatgut in vorbereitetem und nicht vorbereitetem Boden
- mit einem Grundrahmen (2);
- mit einer Mehrzahl von Werkzeugeinheiten (7 bis 13), die jeweils eine Schneid-Stützanordnung (31) und ein Schar (19) aufweisen, und die am Grundrahmen über eine Parallelogrammführung (22) angeordnet sind; und
- mit einem Saatgutdosiersystem (3, 4, 5, 6);
wobei in jedem Parallelogramm (22) eine Kolben-Zylindereinheit (41) vorgesehen ist, die etwa parallel zu einer Diagonale (D) der Parallelogrammführung (22) angeordnet ist;
dadurch gekennzeichnet,
daß diese Kolben-Zylindereinheiten (41) miteinander verbunden sind, ohne zusätzliche externe Hydraulikflüssigkeitszufuhr.

2. Drillmaschine nach der Anspruch 1, dadurch gekennzeichnet, daß die Schneid-Stützanordnung (31) mittels einer Haltearmanordnung (34) an der Parallelogrammführung (22) angelenkt ist.

3. Drillmaschine nach Anspruch 2, dadurch gekennzeichnet, daß zwischen der Haltearmanordnung (34) und der Parallelogrammführung (22) eine Verstelleinrichtung (37) zur Höhenverstellung der Schneid-Stützanordnung (31) gegenüber dem Schar (19) angeordnet ist.

4. Drillmaschine nach einem der Ansprüche 1 bis 3, dadurch gekennzeichnet, daß in Fahrtrichtung (F) gesehen hinter den Werkzeugeinheiten (7 bis 13) eine Walze (14) vorgesehen ist, die mittels einer Tragarmanordnung (15, 16) am Grundrahmen (2) angelenkt ist.

5. Drillmaschine nach Anspruch 4, dadurch gekennzeichnet, daß die Tragarmanordnung (15, 16) mittels einer sich am Grundrahmen (2) abstützenden Kolben-Zylindereinheit (17, 18) belastet ist.

6. Drillmaschine nach Anspruch 5, dadurch gekennzeichnet, daß die Kolben-Zylindereinheiten (41; 17, 18) miteinander verbunden sind.

7. Drillmaschine nach Anspruch 5 oder 6, dadurch gekennzeichnet, daß die Kolben-Zylindereinheit (41; 17, 18) einen Nachlaufkolben (47) aufweist, der den Zylinderraum in eine dem Zylinderboden (55) benachbarte ölgefüllte Kammer (49) und eine ölfreie Kammer (48) unterteilt, die dem Kolben (46) benachbart ist.

8. Drillmaschine nach einem der Ansprüche 1 bis 7, dadurch gekennzeichnet, daß die Schneid-Stützanordnung (31) ein Schneidelement (32) aufweist, das lösbar am Stützelement (33) befestigt ist.

9. Drillmaschine nach einem der Ansprüche 1 bis 8, dadurch gekennzeichnet, daß die Werkzeugeinheiten (7 bis 13) ein in Fahrtrichtung (F) gesehen nach hinten geschlossenes V bilden.

10. Drillmaschine nach einem der Ansprüche 1 bis 9, dadurch gekennzeichnet, daß das Schar (19) als Gänsefußschar ausgebildet ist.

11. Drillmaschine nach Anspruch 10, dadurch gekennzeichnet, daß hinter jeder Werkzeugreihe Zustreichelemente (45) höhenbeweglich angeordnet sind.

12. Drillmaschine nach einem der Ansprüche 1 bis 11, dadurch gekennzeichnet, daß das Schar (19) als Gänsefußschar ausgebildet ist.

13. Drillmaschine nach Anspruch 1, dadurch gekennzeichnet, daß die Schneid-Stützanordnung (31) zwei Räder (46) und eine Schneidscheibe (31) zwischen den Rädern (46) aufweist, wobei die Räder (46) und die Schneidscheibe (31) einzeln drehbar sind und die Achse der Schneidscheibe (31) parallel zur Achse der beiden Räder (46) liegt.

## Claims

1. A seed drill (1) for sowing seed in prepared and unprepared soil
- having a basic frame (2);
- having a plurality of tool units (7 to 13), each of which has a cutting/support arrangement (31) and a share (19), and which are disposed on the basic frame over a parallelogram suspension (22); and
- having a seed metering system (3, 4; 5, 6);
a piston-cylinder unit (41), which is disposed roughly parallel to a diagonal (D) of the parallelogram suspension (22), being provided in each parallelogram (22);
**characterised in that** these piston-cylinder units (41) are connected to one another without additional external supply of hydraulic fluid.

2. A seed drill according to Claim 1,
**characterised in that** the cutting/support arrangement (31) is articulated by means of a retention arm arrangement (34) on the parallelogram suspension (22).

3. A seed drill according to Claim 2,
**characterised in that** an adjustment mechanism (37) for the height adjustment of the cutting/support arrangement (31) in relation to the share (19) is disposed between the retention arm arrangement (34) and the parallelogram suspension (22).

4. A seed drill according to one of Claims 1 to 3,
**characterised in that** a roller (14), which is articulated by means of a bracket arrangement (15, 16) on the basic frame (2), is provided behind the tool units (7 to 13) when viewed in the direction of travel (F).

5. A seed drill according to Claim 4,
**characterised in that** the bracket arrangement (15, 16) is loaded by means of a piston-cylinder unit (17, 18) supported on the basic frame (2).

6. A seed drill according to Claim 5,
**characterised in that** the piston-cylinder units (41; 17, 18) are connected to one another.

7. A seed drill according to Claim 5 or 6,
**characterised in that** the piston-cylinder unit (41; 17, 18) comprises a follow-up piston (47), which divides the cylinder chamber into an oil-filled chamber (49) adjacent to the cylinder bottom (55) and an oil-free chamber (48), which is adjacent to the piston (46).

8. A seed drill according to one of Claims 1 to 7,
**characterised in that** the cutting/support arrangement (31) comprises a cutting element (32) which is detachably fixed to the support element (33).

9. A seed drill according to one of Claims 1 to 8,
c**haracterised in that** the tool units (7 to 13) form a V which is closed at the rear when viewed in the direction of travel (F).

10. A seed drill according to one of Claims 1 to 9,
**characterised in that** the share (19) is constructed as a duck-foot share.

11. A seed drill according to Claim 10,
**characterised in that** spreading elements (45) are disposed with height mobility behind each row of tools.

12. A seed drill according to one of Claims 1 to 11,
**characterised in that** the share (19) is constructed as a duck-foot share.

13. A seed drill according to Claim 1,
**characterised in that** the cutting/support arrangement (31) comprises two wheels (46) and a cutting disc (31) between the wheels (46), the wheels (46) and the cutting disc (31) being individually rotatable and the axis of the cutting disc (31) lying parallel to the axle of the two wheels (46).

## Revendications

1. Semoir (1) destiné à répartir des semences dans un sol préparé ou non, comprenant
- un châssis de base (2)
- une pluralité d'unités formant outils de travail du sol (7 à 13), qui présentent chacune un système de coupe et de stabilisation (31) et un soc (19), et qui sont montées contre le châssis de base par l'intermédiaire d'un système de guidage (22) en forme de parallélogramme, et
- un système de dosage des semences (3, 4, 5, 6) ;
une unité de piston et cylindre (41) étant prévue dans chaque parallélogramme (22), laquelle est disposée presque parallèlement à une diagonale (D) du parallélogramme de guidage (22) ; caractérisé en ce que ces unités de piston et cylindre (41) sont reliées les unes aux autres, sans admission de fluide hydraulique externe supplémentaire.

2. Semoir selon la revendication 1, caractérisé en ce que le système de coupe et de stabilisation (31) est articulé contre le parallélogramme de guidage (22) au moyen d'un système à bras de retenue (34).

3. Semoir selon la revendication 2, caractérisé en ce qu'un dispositif de réglage (37), destiné à régler la hauteur du système de coupe et de stabilisation (31) par rapport au soc (19), est disposé entre le système à bras de retenue (34) et le parallélogramme de guidage (22).

4. Semoir selon l'une quelconque des revendications 1 à 3, caractérisé en ce qu'un rouleau (14) est prévu en aval des unités formant outils de travail du sol (7 à 13), par référence au sens de roulement (F), lequel rouleau est articulé contre le châssis de base (2) au moyen d'un système à bras de support (15, 16).

5. Semoir selon la revendication 4, caractérisé en ce que le système à bras de support (15, 16) est sollicité par une unité de piston et cylindre (17, 18) en appui contre le châssis de base (2).

6. Semoir selon la revendication 5, caractérisé en ce que les unités de piston et cylindre (41 ; 17, 18) sont reliées les unes aux autres.

7. Semoir selon la revendication 5 ou 6, caractérisé en ce que l'unité de piston et cylindre (41 ; 17, 18) comporte un piston arrière (47), qui divise le volume intérieur du cylindre en une chambre (49) remplie d'huile, attenante au fond du cylindre (55), et une chambre (48) ne contenant pas d'huile, qui est attenante au piston (46).

8. Semoir selon l'une quelconque des revendications 1 à 7, caractérisé en ce que le système de coupe et de stabilisation (31) comporte un organe de coupe (32), qui est fixé de manière amovible contre l'élément de stabilisation (33).

9. Semoir selon l'une quelconque des revendications 1 à 8, caractérisé en ce que les unités formant outils de travail du sol (7 à 13) forment un V fermé à l'arrière, par référence au sens de roulement (F).

10. Semoir selon l'une quelconque des revendications 1 à 9, caractérisé en ce que le soc (19) est conçu en forme de soc en patte d'oie.

11. Semoir selon la revendication 10, caractérisé en ce que des organes d'enterrage (45), réglables en hauteur, sont disposés en aval de chaque rangée d'outils de travail du sol.

12. Semoir selon l'une quelconque des revendications 1 à 11, caractérisé en ce que le soc (19) est conçu en forme de soc en patte d'oie.

13. Semoir selon la revendication 1, caractérisé en ce que le système de coupe et de stabilisation (31) comporte deux roues (46) et un disque de coupe (31) disposé entre les deux roues (46), les roues (46) et le disque de coupe (31) pouvant tourner individuellement et l'axe du disque de coupe (31) étant parallèle à l'axe des deux roues (46).
